Europäisches Patentamt

European Patent Office

Office européen des brevets

(19)

(11) EP 0 927 953 A1

(12) **DEMANDE DE BREVET EUROPEEN**

(43) Date de publication:
07.07.1999 Bulletin 1999/27

(51) Int Cl.⁶: **G06T 5/00**

(21) Numéro de dépôt: 98204423.2

(22) Date de dépôt: 23.12.1998

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: 31.12.1997 FR 9716763

(71) Demandeur: **Koninklijke Philips Electronics N.V.**
**5621 BA Eindhoven (NL)**

(72) Inventeur: **Makram-Ebeid, Shérif,**
**Société Civile S.P.I.D.**
**75008 Paris (FR)**

(74) Mandataire: **Lottin, Claudine et al**
**Société Civile S.P.I.D.**
**156, Boulevard Haussmann**
**75008 Paris (FR)**

(54) **Procédé de traitement d'une image multidimensionelle bruitée et appareil d'imagerie médicale mettant en oeuvre ce procédé**

(57) L'invention concerne un procédé de traitement d'image pour conserver les bords d'objets représentés dans une image d'intensité et pour réduire le bruit, comprenant des étapes d'acquisition de l'image d'intensité sous forme d'une matrice multidimensionnelle de points (2-D, 3-D), de détermination du gradient d'intensité en chaque point, défini par sa direction ($\theta_p$) et son module ($\|\vec{G}_p\|$), et de passage en chaque point d'un filtre spatial récursif à noyau anisotrope provoquant un degré de lissage plus important perpendiculairement à la direction du gradient que dans la direction du gradient d'intensité. Le noyau est sphérique sur des droites de balayage non normales au gradient d'intensité et ce noyau est une sphère aplatie dont la plus grande dimension est sur des droites normales au gradient d'intensité en un point balayé. L'invention concerne aussi un appareil d'imagerie médicale aux rayons X mettant en oeuvre ce procédé.

FIG.2

## Description

L'invention concerne un procédé de traitement d'image pour réduire le bruit en conservant les bords d'objets représentés dans une image d'intensité, comprenant une étape d'acquisition de l'image d'intensité sous forme d'une matrice multidimensionnelle de points. L'invention concerne également un appareil d'imagerie médicale ayant un système pour mettre en oeuvre ce procédé.

Par points, dans une matrice multidimensionnelle, on entend des pixels pour une image bidimensionnelle et des voxels pour une image tridimensionnelle.

L'invention trouve son application en particulier dans les systèmes médicaux à rayons X fournissant des images multidimensionnelles.

Une méthode de réduction du bruit dans une image numérique bruitée est déjà connue de la publication intitulée "Image Processing : Flows under Min/Max Curvature and Mean Curvature" par R. Malladi et alii, dans "GRAPHIC MODELS AND IMAGE PROCESSING, Vol.58, N°2, March, pp127-141, 1996, ARTICLE N°0011.

Ce document décrit une classe d'algorithmes appropriés à réduire le bruit dans une image et à en rehausser le contraste. Le procédé est applicable aux images bruitées en noir et blanc, ou en couleur. Le procédé comprend deux étapes principales. Premièrement, une formulation d'un ensemble de niveaux de gris ou de niveaux d'intensité est utilisée pour engendrer des courbes joignant les pixels de même intensité dans l'image appelées lignes isophotes. Deuxièmement des moyens sont utilisés pour lisser les irrégularités de courbure des lignes isophotes, ce qui diminue le bruit et rehausse les images. L'opération de lissage des lignes isophotes est menée à bien par des réductions des minima et des maxima de courbure des lignes isophotes, appelées commutation de courbures. Les degrés de réduction de courbure sont sélectionnés dans une fenêtre de manière à diminuer les irrégularités du dessin des lignes isophotes dans des limites. Il en résulte que le bruit est diminué dans cette fenêtre de commutation. Ce procédé est préconisé selon le document cité d'abord parce qu'il comprend seulement un paramètre de rehaussement choisi automatiquement dans la plupart des cas; et ensuite par ce qu'il arrête de lisser un point automatiquement en dépendance des dimensions de la fenêtre de commutation.

En fait, ce procédé repose sur des étapes itératives. Une étape itérative est relancée en boucle autant de fois qu'il est nécessaire pour obtenir un lissage correct des lignes isophotes. Pour une image complexe, c'est-à-dire non géométrique, et tridimensionnelle, c'est-à-dire par exemple de $128^3$ voxels, il a été trouvé par des essais faits par ailleurs, la nécessité de réaliser 300 à 500 itérations, ce qui conduit, dans l'état actuel de la technique à des temps de calcul de l'ordre de 10 heures par image.

Un but de l'invention est de fournir un procédé pour éliminer le bruit, c'est-à-dire lisser une image complexe multidimensionnelle, avec un temps de calcul beaucoup plus court, c'est-à-dire qui ne nécessite qu'un faible nombre d'itérations.

Ce but est atteint au moyen d'un procédé de traitement d'image pour conserver les bords d'objets représentés dans une image d'intensité et pour réduire le bruit, selon la revendication 1.

Un avantage du procédé selon l'invention est qu'il est récursif, donc il peut être mis en oeuvre avec une grande économie de calculs parce que, à chaque passage du filtre en un point, des éléments de calcul déjà précédemment effectués sont utilisés. Ainsi, il peut être mis en oeuvre en un temps plus court qu'un procédé itératif. Par exemple, avec les techniques actuelles, le présent procédé nécessite moins d'une minute pour traiter un volume de $128^3$ voxels. De ce fait, il est beaucoup plus facile à mettre en oeuvre et environ 1000 fois plus rapide que le procédé connu.

Un autre avantage du présent procédé est qu'il est adaptatif, c'est-à-dire que le filtrage s'adapte automatiquement en chaque point au type de structure rencontrée. Ce procédé applique donc un filtrage différent aux points du fond et aux points des bords d'objets. Donc ce procédé permet de lisser l'image en conservant des bords d'objets bien nets, non déplacés, non déformés, et débarrassés du bruit. Ce procédé est précis et performant.

Un autre avantage du présent procédé est qu'il concerne un filtre spatial. Il ne nécessite donc pas d'autres données que celle de la seule image traitée, et en outre il est robuste. Comme il est très rapide, il peut néanmoins être utilisé dans le traitement d'une séquence d'images.

Un autre avantage du présent procédé est qu'il est complètement automatique.

Ce procédé est mis en oeuvre dans un appareil selon la revendication 10.

L'invention est décrite ci-après en détail, en référence aux figures schématiques annexées, dont la liste est la suivante :

les FIG.1A et 1B qui représentent respectivement une image tridimensionnelle bruitée et filtrée ;
la FIG.2 qui représente sous forme de blocs les étapes d'un procédé de filtrage du bruit dans une image tridimensionnelle ou bidimensionnelle ;
la FIG.3A qui représente sous forme de blocs les étapes générales de détermination du facteur de lissage $\alpha$, et les FIGs.3B et 3C qui illustrent en détail les déterminations du facteur de lissage $\alpha$ pour traiter respectivement une image tridimensionnelle et une image bidimensionnelle ;
la FIG.4A qui représente les orientations discrétisées $\Theta_i$ du vecteur gradient pour une image tridimensionnelle dans un repère et la FIG.4B qui représente les droites de balayage $\psi'_i \psi_i$ discrétisées

utilisées pour filtrer l'image tridimensionnelle ;

les FIGs.5A, 5B, 5C qui montrent dans trois cas les rapports entre les directions discrétisées des gradients et les droites de balayage perpendiculaires ;

la FIG.6A qui représente les orientations discrétisées $\Theta_i$ du vecteur gradient dans le plan de l'image pour une image bidimensionnelle et la FIG.6B qui représente les droites de balayage discrétisées $\psi'_j$ $\psi_j$ utilisées pour filtrer l'image bidimensionnelle ;

les FIGS.7A et 7B qui illustrent les balayages causal et anticausal pour filtrer une image bidimensionnelle ;

les FIGS.8A et 8B qui illustrent les noyaux des filtres $F\alpha$, à dimensions variables, utilisés pour filtrer une image tridimensionnelle ;

la FIG.9 qui montre un appareil à rayons X avec des moyens pour mettre en oeuvre une méthode de traitement d'image.

## PROCEDE

Les figures sont décrites ci-après en détail en relation avec les différentes étapes d'un procédé de traitement spatial récursif complètement automatique d'une image numérique bruitée multidimensionnelle, pour diminuer le bruit tout en conservant avec une grande précision les détails fins et les bords des objets représentés dans cette image. Le procédé vise particulièrement à effectuer un fort lissage des bords pour mieux distinguer les bords du fond de l'image. Le procédé vise donc à appliquer un fort degré de filtrage dans les directions des bords d'objets et un plus faible degré dans les directions perpendiculaires à ces bords.

Par détails fins, on entend des détails d'objet ayant une dimension de l'ordre de quelques pixels, par exemple inférieure ou égale à 10 pixels. Par multidimensionnelle, on entend une image à 2 ou 3 dimensions spatiales, et à l'occasion 1 dimension temporelle supplémentaire si l'image est animée.

Le procédé trouve une application particulière dans le traitement d'images vasculaires obtenues par le moyen d'un appareil aux rayons X travaillant en mode fluoroscopique. Dans ce mode, les doses de rayons X pour former l'image sont très faibles d'où il résulte que l'image est très bruitée. Les images vasculaires représentent des objets tels que des artères qui sont distingués du fond surtout par leur lignes de bord, des très fins vaisseaux tels que ceux du cerveau, et des outils fins tel qu'un cathéter qui peuvent être assimilés à un bord. Le bruit dans ces image fait que ces bords sont entachés de rugosités, recouverts de petites structures avec des courbures atypiques qui rendent difficile l'exploitation de ces images par un praticien qui veut visualiser en temps réel une opération pratiquée sur un patient. Le présent procédé vise à éliminer ces structures et rugosités pour révéler les bords des objets ou les objets fins dans toute leur netteté.

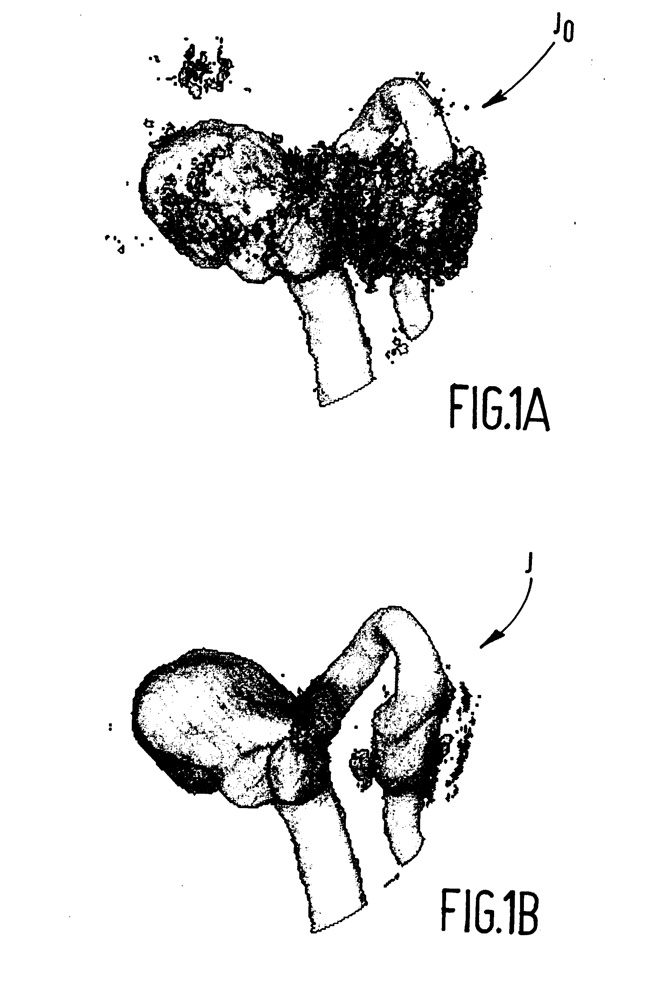

La FIG.1A montre une image numérique $J_0$

dans une application représentant une artère en trois dimensions (3-D) envisagée à titre d'exemple. Cette image $J_0$, appelée image d'origine, est très bruitée. Notamment, le bruit forme des taches empêchant un praticien de bien distinguer les limites entre l'artère et le fond. Cette artère, dans l'exemple traité, a une excroissance latérale appelée anévrisme dont le praticien veut diagnostiquer l'importance, ou que le praticien veut éliminer par une opération dans le but d'éviter un problème appelé rupture d'anévrisme. Dans une telle image médicale, il est très important de supprimer le bruit, sans supprimer des détails de l'objet, afin que le praticien puisse finalement opérer l'artère avec une grande précision, c'est-à-dire obturer l'anévrisme sans endommager l'artère elle-même. La FIG.1B représente l'image J débruitée par la méthode de l'invention, correspondant à l'image bruitée $J_0$ de la FIG.1A.

Dans le cas précité, il est important de pouvoir traiter l'image multidimensionnelle en un temps très court, afin que le praticien puisse suivre en direct l'évolution de la région de l'artère sous l'action des gestes opératoires. Cette technique de suivi d'une opération au moyen d'un affichage simultané d'une image, ou d'une séquence d'images, permet de réaliser des gestes opératoires de manière non invasive, c'est-à-dire sans ouvrir le patient, par le moyen d'un cathéter introduit dans le système artériel du patient et dont la progression est suivie sur une image de rayons X en mode fluoroscopique. Cette technique permet de traiter des anévrismes du cerveau sans avoir recours à une trépanation qui serait nécessaire pour avoir une vision directe de la zone à opérer. Ceci évite de nombreux problèmes postopératoires.

Il est également important de pouvoir traiter l'image par un procédé automatique. Par procédé automatique de traitement d'image, on entend un procédé de construction d'une image débruitée à partir d'une image bruitée, sans intervention humaine, par l'action autonome d'un système de mise en oeuvre du procédé.

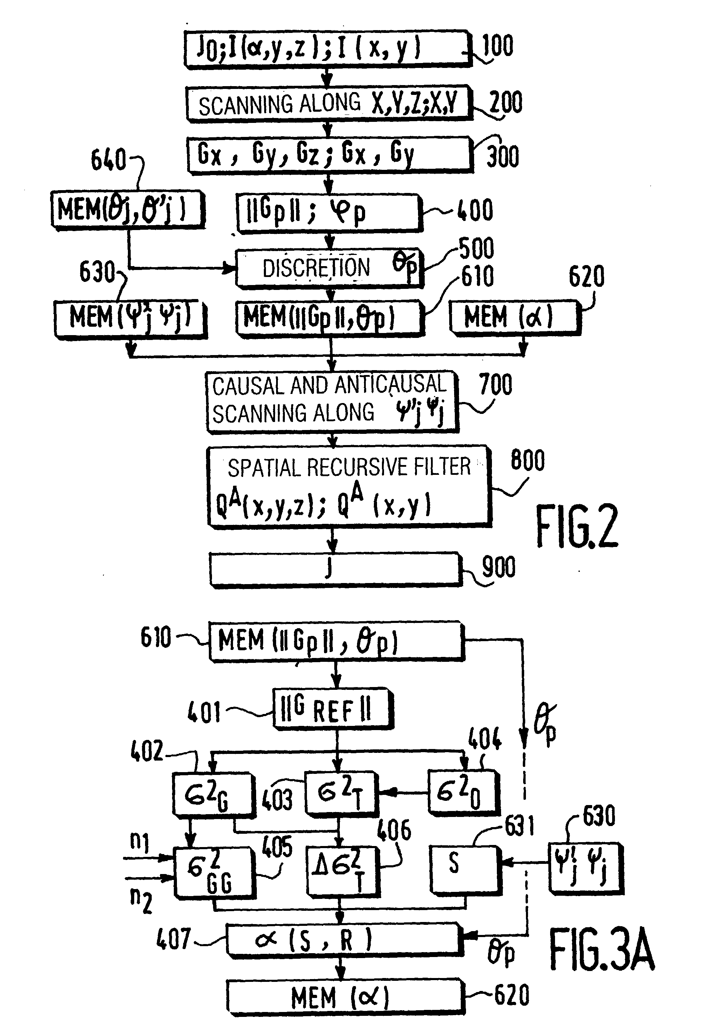

Le procédé selon l'invention est décrit ci-après pour le traitement d'une image tridimensionnelle 3-D, ainsi que pour le traitement d'une image bidimensionnelle 2-D. On appelle voxels les éléments volumiques des images tridimensionnelles et pixels les éléments des images bidimensionnelles. Ce procédé comprend en référence avec la FIG.2 les étapes principales de :

### 1) Acquisition d'une image numérique.

En 3-D : Une image numérique $J_0$ est acquise par des moyens 100 de formation d'image numérique sous la forme d'une matrice tridimensionnelle de voxels $P(x,y,z)$, caractérisés par leurs coordonnées $x,y,z$ selon trois axes de coordonnées $X,Y,Z$ relatifs à l'image, et par leur intensité numérisée $I(x,y,z)$, par exemple codée en niveaux de gris.

En 2-D : Une image numérique est acquise par les moyens 100 de formation d'image numérique sous la forme d'une matrice bidimensionnelle 2-D de pixels P(x,y) caractérisés par leurs coordonnées x,y selon deux axes de coordonnées X,Y relatifs à l'image et par leur intensité I(x,y) numérisée par exemple codée en niveaux de gris.

## 2) Evaluation des gradients d'intensité.

**En 3-D** : Une détermination des gradients d'intensité est d'abord effectuée par des moyens 300 qui réalisent des calculs des dérivées d'ordre 1 de la fonction d'intensité I(x,y,z) dans l'image 3-D bruitée $J_0$, selon par exemple les axes orthogonaux X,Y,Z, en chaque voxel courant P(x,y,z) à traiter.

Pour réaliser cette étape de manière automatique, de préférence, l'image $J_0$ à traiter est soumise à un balayage systématique et automatique 200, voxel après voxel, selon des droites de balayage parallèles aux axes X,Y,Z. Au cours de ce balayage systématique et automatique 200, l'intensité I(x,y,z) de chaque voxel P(x,y,z) est soumise à un filtrage 300 au moyen de filtres orientés connus sous le nom de "SOBEL" et notés ci-après $SOBEL_x$ selon l'axe X, $SOBEL_y$ selon l'axe Y et $SOBEL_z$ selon l'axe Z. La mise en oeuvre des filtres de SOBEL est décrite dans un ouvrage d'enseignement général intitulé "Computer Vision" par Dana H. Ballard et Christopher M. Brown, publié chez PRENTICE-HALL, Inc., Englewood, Cliffs, New Jersey, US, 07632 p.77, 1.6-17 en relation avec la FIG.3.10C.

Le résultat des filtres de SOBEL permet de déterminer dans une étape 400 en chaque voxel courant P(x,y,z) de l'image $J_0$ tridimensionnelle un vecteur gradient d'intensité $\vec{G}_p$ caractérisé par son module noté $\|\vec{G_p}\|$ et par la direction $\varphi_p$ de son support repéré dans le système orthonormé X,Y,Z.

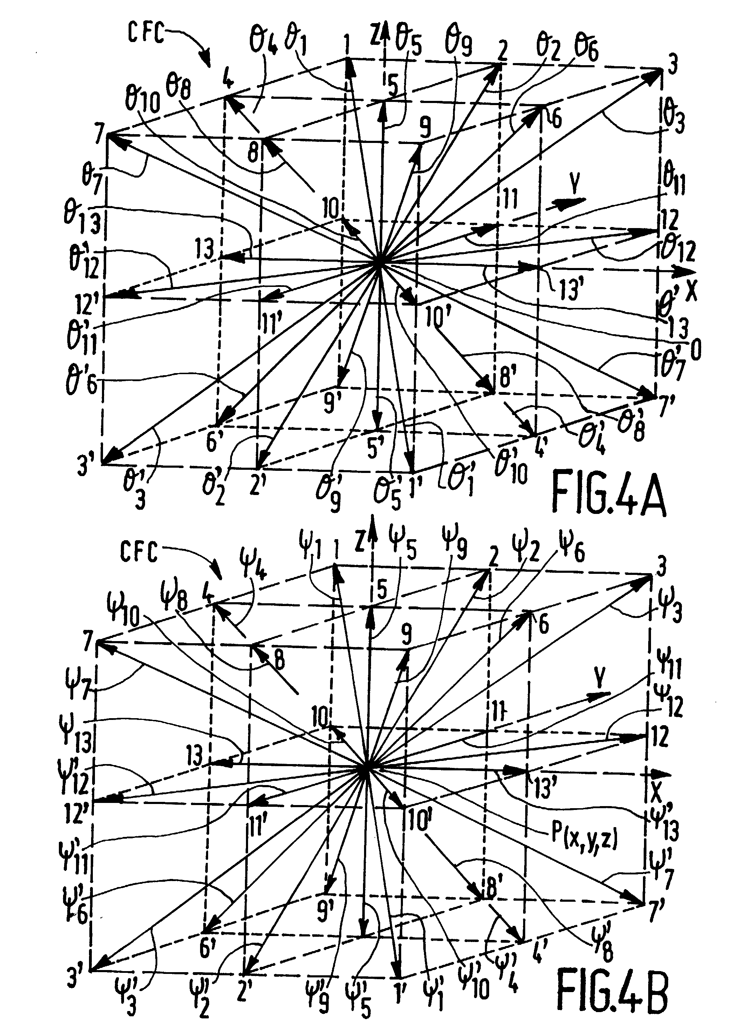

En référence à la FIG.4A, une discrétisation 500 de la direction $\varphi_p$ du support du vecteur gradient est ensuite effectuée selon des directions $\ominus_p$. Dans le traitement de l'image tridimensionnelle, des moyens 500 associent chaque direction $\varphi_p$ du vecteur gradient à une direction discrète notée $\ominus_p$ fixée dans un repère tridimensionnel noté CFC dont le centre 0 est placé en coïncidence avec le voxel courant P(x,y,z). Le repère CFC est un système défini A PRIORI et par exemple stocké dans une mémoire 640. Le repère CFC forme un système cubique à faces et arêtes centrées dont les axes principaux sont parallèles aux axes X,Y,Z de la matrice de l'image et présente une symétrie autour de son centre 0. On définit dans ce repère CFC un nombre de 13 axes $\ominus_p$ directs passant par le centre 0 du système cubique et respectivement par quatre sommets 1, 3, 7, 9, soit $\ominus_1, \ominus_3, \ominus_7, \ominus_9$ ; par le centre 0 et par trois centres 5, 11, 13 des faces centrées soit $\ominus_5, \ominus_{11}, \ominus_{13}$ ; et par le centre 0 et par six milieux d'arêtes 2, 4, 6, 8, 10, 12 soit $\ominus_2, \ominus_4, \ominus_6, \ominus_8, \ominus_{10}$ et $\ominus_{12}$. On définit également dans ce repère CFC un nombre de 13 axes $\ominus'_p$ indirects : $\ominus'_1$ à $\ominus'_{13}$, qui ont des indices correspondant aux axes directs quand ils sont situés dans le prolongement des axes directs et qui sont symétriques des axes directs par rapport au centre 0. On dispose donc dans ce repère CFC de 26 directions discrètes fixes. Toute direction $\varphi_p$ de vecteur gradient $\vec{G}_P$ 1 lié à un voxel courant P(x,y,z) de l'image tridimensionnelle est remplacée au cours de l'opération de discrétisation 500 par l'une des 26 directions portées par les axes $\ominus_p$ ou $\ominus'_p$ en sélectionnant la plus proche dans l'espace.

A l'issue de l'opération 500, tout vecteur gradient $\vec{G}_P$ 2 est donc discrétisé, c'est-à-dire caractérisé par les coordonnées x,y,z du voxel courant P(x,y,z) auquel il s'applique, par son module $\|\vec{G_p}\|$ et par une direction $\ominus_p$ ou $\ominus'_p$ de $\ominus_1$ à $\ominus_{13}$ ou de $\ominus'_1$ à $\ominus'_{13}$.

**En 2-D :** En référence à la FIG.2, dans l'image bidimensionnelle, la détermination des gradients d'intensité est effectuée par les moyens 300 qui réalisent des calculs des dérivées d'ordre 1 de la fonction d'intensité I(x,y) dans l'image bruitée selon les deux axes de coordonnée X,Y de la matrice de l'image.

Cette étape peut être réalisée de manière automatique en balayant l'image systématiquement pixel après pixel selon des droites de balayage parallèles aux axes X,Y par une opération 200. Au cours de ce balayage systématique et automatique l'intensité I(x,y) au pixel courant est soumise au filtrage 300 au moyen de filtres de SOBEL déjà décrits et notés $SOBEL_x$ selon l'axe X et $SOBEL_y$ selon l'axe Y. Ce filtrage détermine en chaque pixel un vecteur gradient $\vec{G}_P$ 3 caractérisé dans une étape suivante 400 par son module $\|\vec{G_p}\|$ et par la direction $\varphi_p$ de son support repérée dans le système d'axes X,Y.

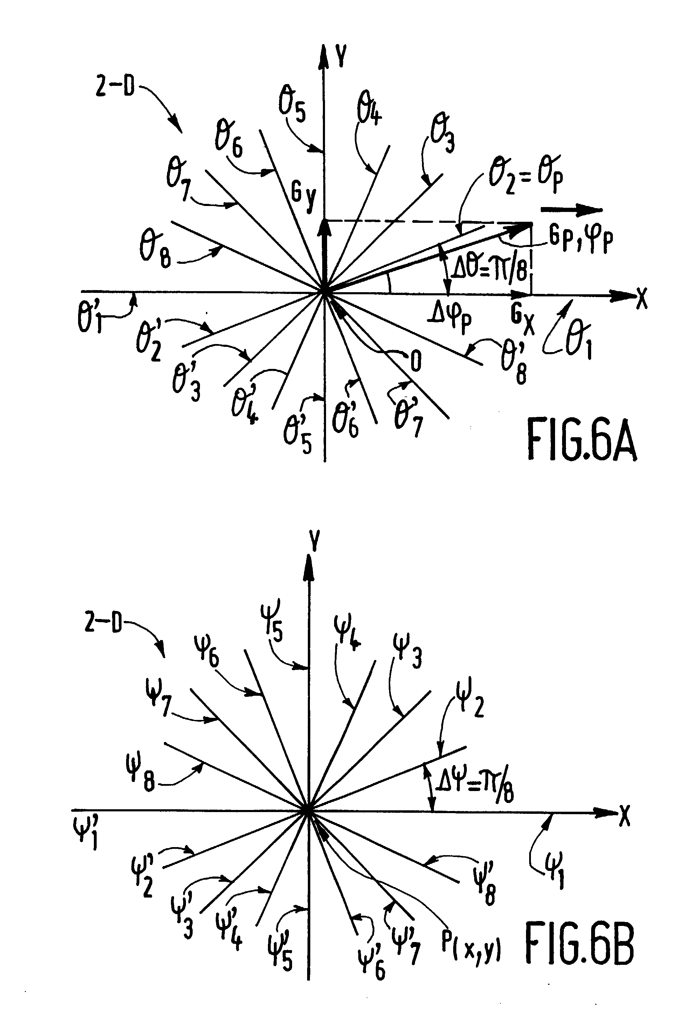

Comme illustré par la FIG.6A, par l'application des filtres $SOBEL_x$ et $SOBEL_y$, on obtient selon les axes X et Y, des composantes $G_x$ et $G_y$ 4, du vecteur gradient d'intensité $\vec{G}_p$ 5 au pixel courant P(x,y). Le calcul du rapport de ces composantes $G_x$ et $G_y$ 6 fournit la valeur de la tangente d'un angle $\varphi_p$ que fait ce vecteur gradient $\vec{G}_p$ 7 par exemple avec l'axe X pris comme référence. Par le calcul de la somme des projections des composantes $G_x$ et $G_y$ 8 sur la direction $\varphi_p$, on déduit également le module $\|\vec{G_p}\|$ de ce vecteur gradient. On définit ainsi, en chaque pixel courant P(x,y), le vecteur gradient par la direction $\varphi_p$ et par son module $\|\vec{G_p}\|$. Une discrétisation 500 de l'orientation $\varphi_p$ du gradient d'intensité est ensuite effectuée selon des directions $\ominus_p$.

En référence à la FIG.6A, dans le cas d'une image à deux dimensions (2-D), la discrétisation des directions $\varphi_p$ des supports des vecteurs gradients est effectuée par les moyens 500 qui associent la direction $\varphi_p$ du vecteur gradient à une direction discrète notée $\ominus_p$ fixée dans le repère bidimensionnel orthogonal X,Y dont le centre 0 est placé en coïncidence avec le pixel courant P(x,y). Dans ce repère bidimensionnel X,Y, déterminé A PRIORI et stocké dans une mémoire 640, les directions $\ominus_p$ passant par 0 sont espacées régulièrement avec un pas $\pi/M$ où M est une constante. Par exemple, la constante M est choisie égale à 8 et le pas d'angle est noté $\Delta\ominus = \pi/8$. Comme montré sur la FIG.

6A, la direction associée au module du gradient $\|\vec{G}_p\|$ est alors non plus $\varphi_p$, mais une direction $\ominus_p$ ou $\ominus'_p$ qui est la direction discrète choisie la plus proche de $\varphi_p$, par exemple $\ominus_2$. Dans le cas d'un pas d'angle $\Delta\ominus = \pi/8$, l'angle de la direction $\ominus_p$ ou $\ominus'_p$ associée au gradient prend les valeurs : $\theta_1 = 0$ ; $\theta_2 = \pi/8$; $\theta_3 = \pi/4$ ; $\theta_4 = 3\pi/8$ ; $\theta_5 = \pi/2$ ; $\theta_6 = 5\pi/8$; $\theta_7 = 3\pi/4$ ; $\theta_8 = 7\pi/8$.

## 3) Lissage de l'image

En référence à la FIG.2, le lissage de l'image pour diminuer le bruit est effectué par filtrage spatial récursif.

### 3.a) Opération de balayage de l'image à traiter

On définit A PRIORI un système de balayage automatique de l'image. Ce système est stocké par exemple dans la mémoire 630. Ce système de balayage a l'avantage de résoudre plusieurs problèmes.

**En 3-D et en 2-D :** En référence respectivement aux FIGs.4B et 6B, ce système de balayage est défini par les mêmes moyens que le système de discrétisation des angles des gradients. Ainsi, respectivement en 3-D et en 2-D, on définit dans le repère CFC et dans le plan de l'image, des ensembles de directions de droites de balayages parallèles entre elles, notées $\psi'_j \psi_j$. La direction de chaque ensemble de droites de balayage est alors respectivement parallèle à une direction discrète $\ominus_j$, $\ominus'_j$ des gradients. Du fait que les directions de discrétisation des gradients $\ominus_j$ et $\ominus'_j$ sont décalées de 180°, ces deux directions $\ominus_j$ et $\ominus'_j$ sont en coïncidence avec une même droite de balayage $\psi'_j \psi_j$. Les directions des droites de balayage sont en outre choisies de même nombre que les directions de discrétisation des gradients et sont réparties dans l'espace avec le même pas. Ces ensembles de droites de balayage sont parcourues pour effectuer le balayage des images 3-D et 2-D de manière telle que chaque voxel ou pixel est visité une fois et une seule pour subir les étapes du procédé. L'homme du métier connaît des méthodes de balayage automatiques d'une image tridimensionnelle et d'une image bidimensionnelle. L'essentiel est que le balayage soit systématique, et effectué selon toutes les directions prédéterminées. Il a été trouvé par l'expérimentation que l'ordre dans lequel les directions prédéterminées sont balayées est indifférent à l'obtention du bon résultat du présent procédé. Ces méthodes de balayage ne sont pas illustrées ici pour des raisons de complexité du dessin.

### 3.b) Définition du pas d'échantillonnage sur les droites de balayage

On définit le pas S d'échantillonnage des voxels et pixels sur les droites de balayages dans une opération 631 en fonction de l'orientation de ces droites respectivement dans le repère CFC et dans le plan de l'image.

**En 3-D** : Lorsque la droite de balayage est parallèle à un axe principal X, Y, Z du repère CFC, c'est-à-dire parallèle à un axe du repère CFC qui joint le centre à un sommet du cube, telle que $\psi_{11}$, $\psi_5$ et $\psi_{13}$, alors le pas S = 1.

Lorsque la droite de balayage, telle que $\psi_2$, est parallèle à un axe du repère CFC qui joint le centre au milieu d'une arête du cube, donc bissectrice d'un angle de 90° fait par deux axes principaux du repère CFC, par exemple X,Y, alors le pas S = $\sqrt{2}$.

Lorsque la droite de balayage, telle que $\psi_3$, est parallèle à un axe du repère CFC qui joint le centre à un sommet du cube, donc fait avec un plan de référence du repère CFC, tel que le plan (X, Y), un angle Arctg $(1/\sqrt{2})$, alors le pas S = $\sqrt{3}$.

Ainsi, le pas S a toujours des valeurs simples :
S = 1, ou S = $\sqrt{2}$, ou S = $\sqrt{3}$.

En référence à la FIG.5A, on note qu'une direction discrétisée de gradient qui se trouve selon un axe principal X, Y ou Z admet un plan perpendiculaire joignant les milieux des arêtes parallèles à cette direction discrétisée de gradient. Ainsi, les directions discrétisées de gradient $\ominus_5$, $\ominus'_5$ admettent un plan perpendiculaire 10, 12, 10', 12'. Il en résulte que quatre droites de balayage perpendiculaires à $\ominus_5$, $\ominus'_5$ sont possible : $\psi'_{10}\psi_{10}$, $\psi'_{11}\psi_{11}$, $\psi'_{12}\psi_{12}$ et $\psi'_{13}\psi_{13}$. Deux de ces droites de balayage $\psi'_{11}\psi_{11}$ et $\psi'_{13}\psi_{13}$ sont parallèles aux grands axes et ont pour pas S = 1, et deux de ces droites de balayage $\psi'_{10}\psi_{10}$ et $\psi'_{12}\psi_{12}$ sont parallèles à des bissectrices d'axes principaux et ont pour pas S = 1.

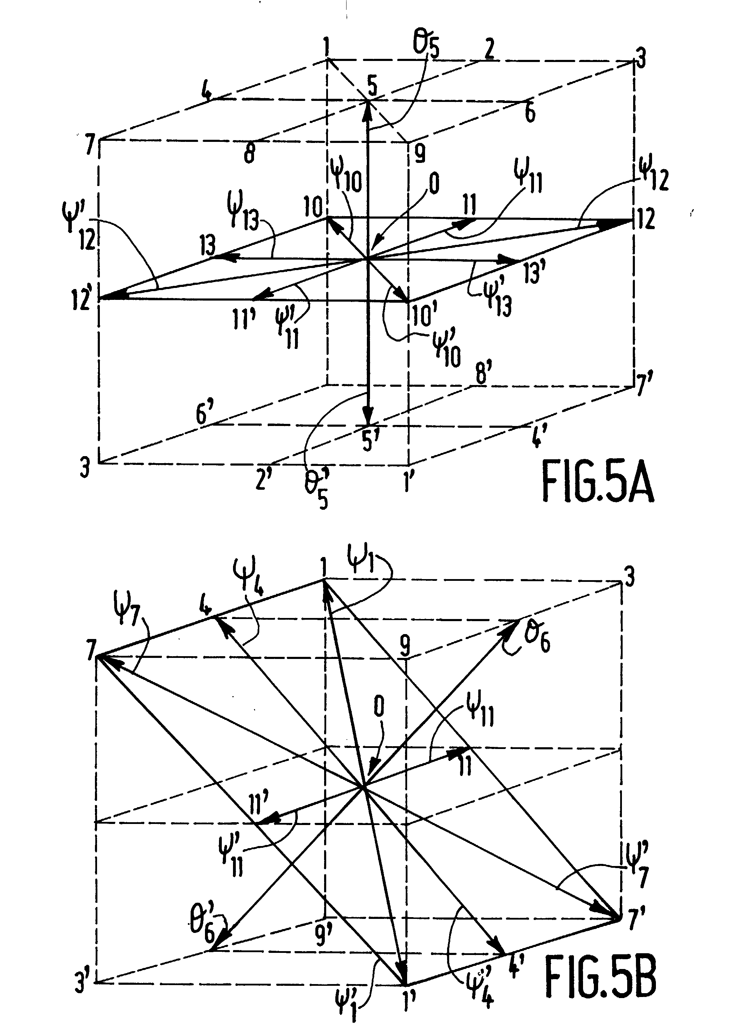

En référence à la FIG.5B, on note que les directions discrétisées de gradient qui joignent le centre O à un milieu d'arête admettent un plan perpendiculaire joignant deux sommets et deux sommets diamétralement opposés. Ainsi, les directions discrétisées de gradient $\ominus_6$, $\ominus'_6$ admettent un plan perpendiculaire 7, 1, 7', 1'. Il en résulte que quatre droites de balayage perpendiculaires à $\ominus_6$, $\ominus'_6$ sont possible : $\psi'_4\psi_4$, $\psi'_{11}\psi_{11}$, $\psi'_1\psi_1$ et $\psi'_7\psi_7$. Une de ces droites de balayage $\psi'_{11}\psi_{11}$ est parallèle aux grands axes et a pour pas S = 1, une de ces droites de balayage $\psi'_4\psi_4$ est parallèle à une bissectrice d'axes principaux et a pour pas S = $\sqrt{2}$, et deux de ces droites de balayage $\psi'_1\psi_1$ et $\psi'_7\psi_7$ font un angle de 60° avec un axe principal et ont pour pas S = $\sqrt{3}$.

En référence à la FIG.5C, on note que les directions discrétisées de gradient qui joignent le centre O à un sommet admettent seulement une droite perpendiculaire joignant deux milieux d'arêtes opposées. Ainsi, les directions discrétisées de gradient telle que $\ominus_1$, $\ominus'_1$ admettent une seule droite de balayage normale possible : $\psi'_{12}\psi_{12}$. Cette droite de balayage $\psi'_{12}\psi_{12}$ est une bissectrice de grands axes et a pour pas S = $\sqrt{2}$.

**En 2-D** : Lorsque la droite de balayage est parallèle à un axe principal X, Y du repère du plan de l'image, c'est-à-dire telle que $\psi_1$, et $\psi_5$, alors le pas S = 1.

Lorsque la droite de balayage, telle que $\psi_3$ et $\psi_7$, est parallèle à une bissectrice d'axes principaux, tels que X,Y, donc bissectrice d'un angle de 90°, alors le pas S = √2.

Lorsque la droite de balayage fait avec l'axe de référence X un angle de $\pi/8$ telle que $\psi_2$ et $\psi_4$, alors on réalise une approximation en remplaçant $\pi/8$ par Arctg(1/2), pour que cette droite de balayage passe par un maximum de pixels. Dans ce cas, le pas S = √5.

Ainsi, le pas S a toujours des valeurs simples : S = 1, ou S = √2, ou S = √5. De plus, chaque direction discrétisée de gradient n'admet qu'une seule droite de balayage perpendiculaire. Toutes les autres droites de balayage du système sont autres que perpendiculaires.

**En 3-D et en 2-D** : Un avantage apporté par ce mode de définition du système de balayage est qu'il est simple à construire. Sa complexité n'excède pas celle de la discrétisation des gradients.

Un autre avantage de ce système de balayage est que toute direction discrétisée de gradient admet au moins une droite de balayage qui lui est perpendiculaire.

Un autre avantage est que l'on peut facilement déterminer les droites de balayage pour qu'elles passent non pas par des points quelconques difficiles à calculer mais par un maximum de voxels ou pixels de manière à ce que le pas de balayage noté S sur chaque droite de balayage ait des valeurs simples à utiliser.

### 3.c) Opération de balayage de l'image

**En 3-D et en 2-D** : Un avantage du système de balayage proposé est qu'il permet une mise en oeuvre simple du présent procédé de filtrage récursif appliqué sur l'image tridimensionnelle ou bidimensionnelle. Une fois ce système de balayage défini, l'image est parcourue, dans une opération 700, de manière systématique et automatique, dans les deux directions portées par une même droite de balayage : la première direction par exemple $\psi_j$ appelé sens causal, et la deuxième direction qui est alors $\psi'_j$ appelé sens anticausal. A cet effet, les voxels P(x,y,z) ou pixels P(x,y) sont numérotés par rapport à un voxel ou pixel origine sur la droite de balayage. La droite est balayée du voxel ou pixel origine $u_0$ en passant par les voxels ou pixels $u_1$, $u_2$,.. $u_j$ jusqu'au dernier voxel ou pixel $u_n$ dans le sens causal, et réciproquement du voxel ou pixel numéroté $u_n$ jusqu'à $u_0$ dans le sens anticausal.

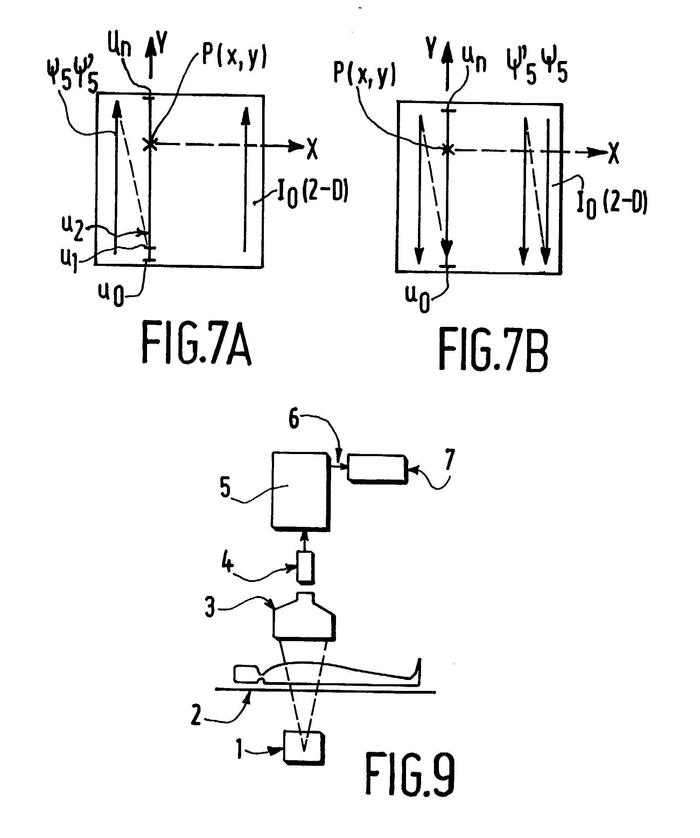

**En 2-D** : A titre d'exemple, les FIG.7A et 7B illustrent respectivement le balayage causal et anticausal d'une image bidimensionnelle selon la droite de balayage $\psi_5\psi'_5$ dans le plan (X,Y) de l'image à traiter. Ces balayages sont effectués de manière standard et automatique comme connu de l'homme du métier.

### 3.d) Définition de la fonction de filtrage récursif

**En 3-D et en 2-D** : Le débruitage est obtenu par un lissage 800 de l'image durant le balayage 700. A cet effet, l'intensité I(x,y,z) ou I(x,y) de chaque voxel ou pixel courant P(x,y,z) ou P(x,y) respectivement est soumise à une fonction récursive de filtrage spatial calculée en chaque voxel ou pixel, pour fournir une nouvelle intensité lissée Q(x,y,z) ou Q(x,y) en chaque voxel ou pixel. Cette fonction effectue un lissage de l'intensité d'un plus grand degré dans la direction perpendiculaire à la direction discrétisée du gradient d'intensité relatif à ce voxel ou pixel que dans la direction discrétisée du gradient d'intensité. Autrement dit, en un voxel ou pixel donné, la fonction de filtrage produit une réponse impulsionnelle plus étalée dans la direction perpendiculaire au vecteur gradient que dans la direction du vecteur gradient.

Pour lisser et débruiter l'image, on applique en chaque pixel courant $u_j$, lors du passage <u>causal</u> dans une direction de balayage donnée $\psi_j$, une fonction récursive de traitement spatial ayant la formulation suivante :

$$Q^C(u_j) = I(u_j) + \alpha(u_j)[Q^C(u_{j-1}) - I(u_j)] \qquad (1)$$

L'exposant "C" indique que l'intensité Q est obtenue en phase de balayage causal. $Q(u_j)$ est l'intensité nouvelle calculée au pixel $u_j$ de la droite de balayage dans le sens causal ; $Q(u_{j-1})$ est l'intensité nouvelle calculée au pixel $u_{j-1}$ déjà balayé sur la droite dans le sens causal ; où I $(u_j)$ est l'intensité d'origine en ce pixel courant $u_j$ et où $\alpha$ $(u_j)$ est un facteur de filtrage compris entre 0 et 1.

Ensuite on applique au même pixel courant uj lors du balayage anticausal sur la même droite de balayage, mais dans la direction de balayage opposée de $\psi'_j$, une fonction récursive de traitement spatial ayant la formulation suivante, en gardant la numérotation des pixels de $u_0$ à $u_n$ déterminée avant l'étape de balayage proprement dite :

$$Q^A(u_j) = Q^C(u_j) + \alpha(u_j)[Q^A(u_{j+1}) - Q^C(u_j)] \qquad (2)$$

L'exposant "A" indique que la nouvelle intensité Q est obtenue en phase anticausale. On rappelle que le pixel $u_o$ reste fixe sur la droite qui porte $\psi_j$ et $\psi'_j$ quelle que soit la direction de balayage.

Ainsi le passage causal, dans une première direction sur une droite de balayage d'orientation donnée, transforme l'intensité d'origine $I(u_j)$ d'un pixel courant $u_j$ en une nouvelle intensité $Q^C(u_j)$ qui prend en compte l'intensité du pixel adjacent $u_{j-1}$ qui vient juste d'être balayé et de se voir attribuer une nouvelle intensité causale $Q^C(u_{j-1})$. Puis le passage anticausal sur la même droite de balayage, dans la direction de balayage opposée, transforme l'intensité $Q^C(u_j)$ nouvellement obtenue au passage causal pour ce pixel numéroté uj en une nouvelle intensité $Q^A(u_j)$ qui prend en compte l'intensité du pixel adjacent numéroté $u_{j+1}$ qui vient juste d'être balayé et de se voir attribuer une nouvelle intensité anti-

causale $Q^A(u_{j+1})$. Le résultat du filtrage est stocké en 900.

On analyse l'opération de cette fonction de lissage selon les positions relatives de la droite de balayage et de la direction discrétisée du gradient au point balayé.

Dans une première situation, où la droite de balayage n'est pas dans un plan normal à la direction discrétisée du gradient, on applique systématiquement un filtrage appelé isotrope, c'est-à-dire que, conceptuellement, on définit un noyau de filtre isotrope, de même dimension dans toutes les directions.

Dans une seconde situation. où la droite de balayage se trouve dans un plan normal à la direction discrétisée du gradient, on applique systématiquement un filtrage appelé anisotrope, c'est-à-dire que, conceptuellement, on définit un noyau de filtre anisotrope, ce noyau présentant une plus faible dimension dans la direction discrétisée du gradient que dans le plan normal à la direction discrétisée du gradient où se trouve la droite de balayage. Dans ce cas-là on se trouve en présence d'un gradient fort si le voxel ou pixel balayé est situé sur un BORD.

Ce concept revient à effectuer en un voxel ou pixel balayé donné des passages sur toutes les droites de balayage avec un filtre à noyau dont la forme et les dimensions varient selon les droites de balayage et à combiner les résultats. Dans ces passages :

Ce noyau est isotrope pour toutes les droites de balayage qui ne sont pas normales à la direction discrétisée du gradient au voxel ou pixel balayé. Ce noyau est anisotrope pour une droite de balayage qui est normale à la direction discrétisée du gradient au voxel ou pixel balayé.

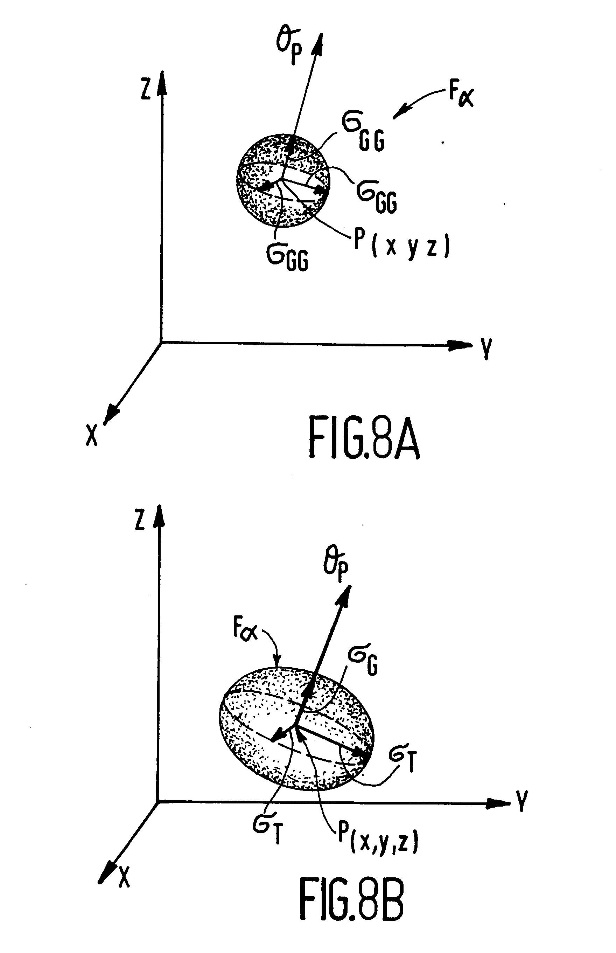

La combinaison de ces passages équivaut au passage d'un filtre ayant un noyau en forme de sphère applatie illustrée par la FIG.8B dont le rayon efficace dans le plan perpendiculaire à la direction discrétisée du gradient est appelé rayon équatorial noté $\sigma_T$, et dont le rayon dans la direction discrétisée du gradient est appelé rayon polaire noté $\sigma_G$.

Le paramètre qui caractérise les noyaux isotropes dans la première situation où les directions de balayage ne sont pas normales à la direction discrétisée du gradient est appelé rayon des noyaux isotropes et noté $\sigma_{GG}$. Un noyau isotrope de forme sphérique est illustré par la FIG.8A.

Lorsque le gradient d'intensité se trouve être substantiellement faible, pratiquement nul, les dimensions ou paramètres du filtre anisotrope diminuent et deviennent identiques dans toutes les directions à un paramètre basique noté $\sigma_0$.

### 3.e) Détermination des paramètres des noyaux des filtres

Dans cette opération, on détermine à partir du paramètre basique $\sigma_0$ les valeurs des paramètres des noyaux des filtres, notée $\sigma_T$ pour le rayon efficace du noyau anisotrope dans le plan normal à la direction discrétisée du gradient et notée $\sigma_{GG}$ pour les noyaux isotropes sur les droites de balayage non normales à la direction discrétisée du gradient.

En référence à la FIG.3A, on définit par une opération 401 une valeur appelée gradient de référence $\|\vec{G}_{REF}\|$ qui est la valeur de gradient au-dessous de laquelle on déclare A PRIORI que le pixel correspondant n'appartient pas à un bord, c'est-à-dire au-dessous de laquelle le gradient est considéré suffisamment faible pour que l'on utilise le filtrage isotrope dont le noyau a pour rayon le paramètre basique $\sigma_0$. Au-dessus de cette valeur, on déclare que le pixel correspondant appartient à un bord et on applique le filtrage à noyau anisotrope. Par bord, on entend une zone de l'image qui présente une transition d'intensité, telle que la transition entre un objet et le fond. Pour déterminer $\|\vec{G}_{REF}\|$, on mesure parmi les gradients par exemple stockés dans la mémoire 610, la valeur trouvée la plus élevée notée , $\|\vec{G}_{REF}\|$, et on fixe la valeur de $\|\vec{G}_{REF}\|$ petite devant celle de $\|\vec{G}_{MAX}\|$. A titre d'exemple :

$$\|\vec{G}_{REF}\| = \|\vec{G}_{MAX}\|/10 \text{ ou } \|\vec{G}_{REF}\| = \|\vec{G}_{MAX}\|/20$$

En référence aux FIGS.8A, 8B et 3A, on définit alors par une opération 404 le paramètre basique $\sigma_0$ et par les opérations 402, 403 et 406 des relations entre le paramètre basique $\sigma_0$ et les rayons $\sigma_T$ et $\sigma_G$ du noyau anisotrope :

$$\sigma_G^2 = \frac{\sigma_o^2}{(1 + \frac{\|\vec{G}_p\|^2}{\|\vec{G}_{REF}\|^2})^2} \qquad (3)$$

$$\sigma_T^2 = \frac{\sigma_o^2}{1 + \frac{\|\vec{G}_p\|^2}{\|\vec{G}_{REF}\|^2}} \qquad (4)$$

Le degré d'anisotropie $\Delta\sigma_T$ est lié aux rayons polaire et équatorial des noyaux anisotropes par la relation :

$$\Delta\sigma_T^2 = \sigma_T^2 - \sigma_G^2 \qquad (5)$$

On définit aussi, par l'opération 405, à partir du rayon polaire et par son carré, le paramètre $\sigma_{GG}$ qui caractérise le noyau isotrope de filtrage quand la droite de balayage n'est pas normale à la direction discrétisée du gradient :

$$\sigma_{GG}^2 = \frac{n_1 \sigma_G^2}{n_2} \qquad (6a)$$

où $n_1$ est le nombre de dimensions de l'image traitée, et où $n_2$ est le nombre des droites de balayage.

**En 3-D :**

$$\sigma_{GG}^2 = \frac{3\sigma_G^2}{13} \qquad (6b)$$

l'image 3-D ayant 3 dimensions et 13 droites de balayage $\psi_1$ à $\psi_{13}$.

**En 2-D** :

$$\sigma_{GG}^2 = \frac{2\sigma_G^2}{8} \qquad (6c)$$

l'image ayant 2 dimensions et 8 droites de balayage $\psi_1$ à $\psi_8$.

### 3.f) Détermination du facteur de lissage $\alpha$

**En 3-D et 2-D :** En référence à la FIG.3A, le facteur $\alpha$ ($u_j$) appelé ci-après FACTEUR DE USSAGE $\alpha$ est défini par l'opération 407 pour fournir un lissage d'un degré plus grand dans la direction perpendiculaire à la direction discrétisée du vecteur gradient d'intensité que dans la direction discrétisée de ce vecteur gradient d'intensité. Le FACTEUR DE LISSAGE $\alpha$ est choisi d'une part comme une fonction de la direction discrétisée $\Theta_p$ du vecteur gradient $\vec{G}_P$ et comme une fonction du pas noté S des voxels ou pixels sur la droite de balayage $\psi_j$, $\psi'_j$. Le FACTEUR DE LISSAGE $\alpha$ est choisi d'autre part comme une fonction du module du gradient d'intensité $\|\vec{G}_p\|$ au voxel ou pixel courant P(x,y,z) ou P(x,y).

**En 3-D et en 2-D** : Les caractéristiques d'intensité I(x,y,z) ou I(x,y) et des gradients en chaque voxel P(x,y,z) ou pixel P(x,y) sont d'abord stockées par exemple dans une mémoire 610 et associées aux coordonnées de manière que :

**En 3-D** : à x,y,z, correspond I(x,y,z), $\Theta$ parmi $\Theta_1$ à $\Theta_{13}$, ou $\Theta'_1$ à $\Theta'_{13}$ et , pour l'image tridimensionnelle.

**En 2-D** : Pour l'image bidimensionnelle, à x,y correspondent I(x,y), $\Theta$ parmi $\Theta_1$ à $\Theta_8$, ou $\Theta'_1$ à $\Theta'_8$ et $\|\vec{G}_p\|$.

**En 3-D et 2-D** : Finalement l'opération 407 donne le facteur $\alpha$ par la relation (7) que l'homme du métier peut déduire d'un calcul des moments relatifs à une réponse impulsionnelle infinie, en se basant sur l'hypothèse que le gradient varie lentement :

$$\alpha = 1 + \frac{S^2}{R^2} - \sqrt{(1 + \frac{S^2}{R^2})^2 - 1} \qquad (7)$$

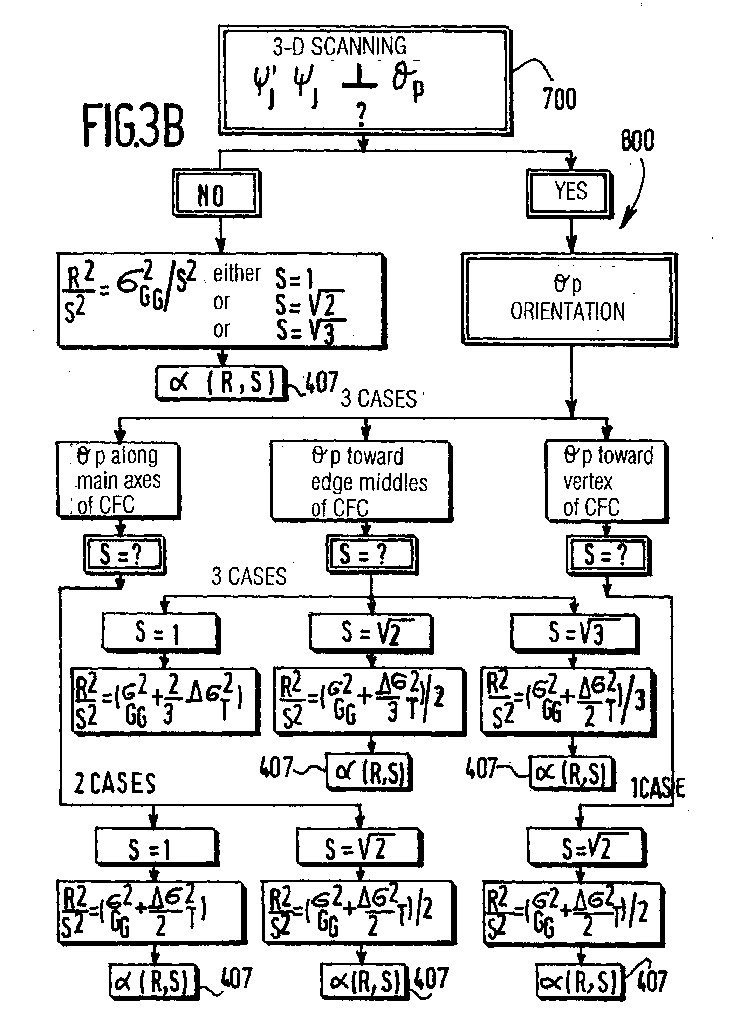

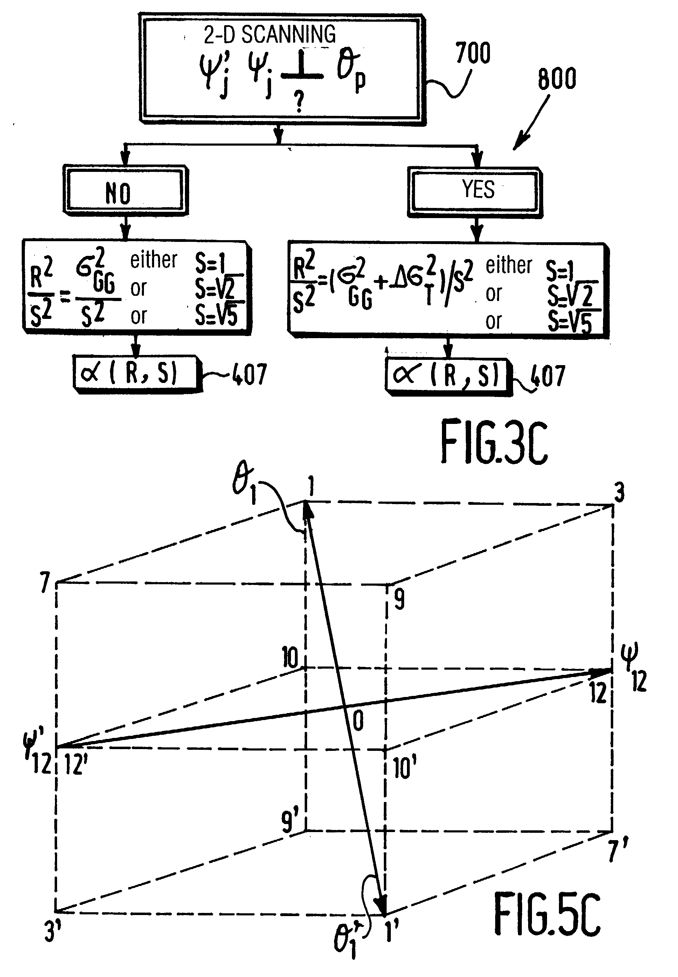

comprise entre 0 et 1, où S est le pas d'échantillonnage des voxels ou pixels le long des droites de balayage. R est un facteur calculé en fonction des rayons polaire et équatorial du filtre anisotrope $\sigma_G$ et $\sigma_T$, en fonction de la direction $\Theta_p$ du vecteur gradient $\|\vec{G}_p\|$ vis-à-vis de la droite de balayage $\psi_j$ et en outre en fonction du pas d'échantillonnage S défini précédemment. En référence aux FIGs.3B et 3C, la détermination du facteur de lissage $a$ revient donc à déterminer le facteur R qui définit le noyau anisotrope utilisé à chaque passage, lors du balayage de l'image. A cet effet, on détermine le rapport $R^2/S^2$. Cette détermination est faite dans les deux situations du balayage de l'image rencontrées.

**En 3-D** : (FIG.3B) **Première situation**, en un voxel donné, P(x,y,z), la droite de balayage $\psi_j$ n'est pas normale à la direction discrétisée $\Theta_p$ du vecteur gradient $\|\vec{G}_p\|$ 9. Dans la formule de $\alpha$ (7), on exprime :

$$R^2/s^2 = \sigma_{GG}^2/S^2.$$

**Deuxième situation**, en un voxel donné, P(x,y,z), la droite de balayage $\psi_j$ est normale à la direction discrétisée du vecteur gradient $\|\vec{G}_p\|$ dont l'orientation $\Theta_p$ discrétisée est encore à prendre en compte selon trois cas :

Dans le premier cas où $\Theta_p$ est parallèle à un axe principal X,Y,Z du repère CFC (et $\|\vec{G}_p\|$ perpendiculaire à $\psi_j$), on exprime :

$$R^2/S^2 = (\sigma_{GG}^2 + \frac{\Delta\sigma_T^2}{2}) / S^2$$

Dans le second cas où $\Theta_p$ est parallèle à une bissectrice de deux axes principaux du repère CFC, donc parallèle à un axe qui joint le centre 0 au milieu d'une arête en faisant un angle de 45° avec un axe principal, (avec $\vec{G}_p$ perpendiculaire à $\psi_j$), et en outre : si S = 1, on exprime :

$$R^2/S^2 = (\sigma_{GG}^2 + \frac{2}{3}\Delta\sigma_T^2)$$

ou bien si S = √2, on exprime :

$$R^2/S^2 = (\sigma_{GG}^2 + \frac{\Delta\sigma_T^2}{3}) / 2$$

ou bien si S = √3, on exprime :

$$R^2/S^2 = (\sigma_{GG}^2 + \frac{\Delta\sigma_T^2}{2}) / 3$$

Les coefficients appliqués au paramètre $\Delta\sigma_T$ sont prévus pour que sa contribution soit affectée finalement d'un coefficient 1 après la réalisation des 13 combinaisons.

Dans le troisième cas où $\Theta_p$ est parallèle à un axe du repère CFC joignant le centre à un sommet du cube, cas qui se produit seulement si $S = \sqrt{2}$, on exprime :

$$R^2/S^2 = (\sigma_{GG}^2 + \frac{2}{3}\Delta\sigma_T^2) / 2.$$

**En 2-D** : (FIG.3C) Dans le traitement d'une image bidimensionnelle le noyau de filtrage est simplement un cercle aplati ayant un grand rayon $\sigma_T$ dans la direction perpendiculaire à la direction discrétisée du vecteur gradient et un petit rayon $\sigma_G$ dans la direction discrétisée du vecteur gradient. Une seule droite de balayage est perpendiculaire à la direction discrétisée du gradient.

**Première situation**, en un pixel donné, P(x,y), la droite de balayage $\psi'_j \psi_j$ n'est pas normale à la direction discrétisée $\Theta_p$ du vecteur gradient $\vec{G}_p$. Dans la formule de $\alpha$ (7), on exprime :

$$R^2/s^2 = \sigma_{GG}^2 \, 10/S^2$$

**Deuxième situation**, en un pixel donné P(x,y) la droite de balayage $\psi'_j \psi_j$ est normale à la direction discrétisée du vecteur gradient $\vec{G}_p$. Le pas S sur la droite de balayage est encore à prendre en compte.

Dans le premier cas où la direction discrétisée du gradient $\Theta_p$ est perpendiculaire à une droite de balayage $\psi'_j \psi_j$ parallèle à un axe principal X,Y de l'image, où S = 1, on exprime :

$$R^2/S^2 = (\sigma_{GG}^2 + \frac{\Delta\sigma_T^2}{2}) / S^2.$$

Dans le second cas où la direction discrétisée du gradient $\Theta_p$ est perpendiculaire à une droite de balayage $\psi'_j \psi_j$ parallèle à une bissectrice de deux axes principaux de l'image, en faisant un angle de 45° avec un axe principal, cas où : $S = \sqrt{2}$, on exprime :

$$R^2/S^2 = (\sigma_{GG}^2 + \frac{\Delta\sigma_T^2}{3}) / 2$$

Dans le troisième cas où la direction discrétisée du gradient $\Theta_p$ est perpendiculaire à une droite de balayage ayant un pas $S = \sqrt{5}$, on exprime :

$$R^2/S^2 = (\sigma_{GG}^2 + \frac{\Delta\sigma_T^2}{3}) / 5 \, .$$

Les valeurs de $\alpha$ sont alors calculées avec la relation (7) et tabulées en 620 pour le calcul des fonctions (1) et (2).

**APPAREIL**

A titre d'exemple, en référence à la FIG.9, un appareil d'imagerie médicale comprend un système de radiographie numérisée ayant des moyens pour mettre en oeuvre la méthode de réduction du bruit décrite plus haut. Cet appareil comprend une source 1 de rayons X, une table 2 pour recevoir le patient, un dispositif récepteur des rayons X ayant traversé le patient, et en particulier un dispositif intensification d'image 3 couplé à un tube vidéo 4 qui fournit des données à un système 5 de traitement d'image comprenant un microprocesseur. Ce dernier comprend plusieurs sorties dont une sortie 6 couplée à un moniteur 7 pour la visualisation des images traitées ou à traiter, ou bien de séquences d'images.

L'image radiographique bidimensionnelle numérisée peut contenir $512^2$ ou $1024^2$ pixels codés sur 8 bits ou 10 bits. Chaque pixel peut être ainsi affecté d'un parmi 256 ou 1024 niveaux d'intensité. Par exemple, les régions sombres ont un niveau d'intensité faible, et les régions claires de l'image ont un niveau d'intensité élevé. L'image radiographique tridimensionnelle numérisée peut contenir $128^3$ voxels.

L'image numérisée peut être obtenue en mode fluoroscopique. L'invention peut trouver son application particulièrement dans le traitement d'images artériographiques. Le traitement de l'image numérique selon le procédé décrit plus haut est mis en oeuvre dans ses différentes étapes et opérations dans le système 5. Les données peuvent être stockées dans une zone mémoire non représentée. Des moyens d'enregistrement non représentés peuvent être en outre utilisés.

**Revendications**

1.  Procédé de traitement d'image pour conserver les bords d'objets représentés dans une image d'intensité et pour réduire le bruit, comprenant des étapes de :

    acquisition de l'image d'intensité sous forme d'une matrice multidimensionnelle de points (2-D, 3-D),
    détermination du gradient d'intensité en chaque point, défini par sa direction ($\Theta_p$) et son module ($\|\vec{G}_p\|$),
    passage en chaque point d'un filtre spatial récursif à noyau anisotrope provoquant un degré de lissage plus important perpendiculairement à la direction du gradient que dans la direction du gradient d'intensité.

2. Procédé selon la revendication 1, comprenant des sous-étapes de :

discrétisation des directions ($\Theta_p$) des gradients d'intensité dans un premier système d'un nombre N d'axes centrés,

balayage automatique de l'image selon un second système de même nombre N de droites centrées ($\psi'_j, \psi_j$) respectivement parallèles aux directions du premier système d'axes, et en outre telles que chaque direction discrétisée de gradient ($\Theta_p$) du premier système admette un nombre inférieur à N de droites de balayage non perpendiculaires et un nombre complémentaire égal ou supérieur à 1 de droites de balayage perpendiculaires,

définition d'un filtrage à noyau variable, incluant un premier ensemble de sous-filtres à noyaux isotropes identiques passés au point courant sur les droites de balayage du second système qui sont non perpendiculaires à la direction discrétisée du gradient, et un second ensemble de sous-filtres à noyaux anisotropes passés au point courant sur les droites de balayage du second système qui sont perpendiculaires à la direction discrétisée du gradient,

et combinaison des N résultats des N sous-filtres pour fournir le résultat du filtre spatial récursif.

3. Procédé selon la revendication 2, comprenant pour la mise en oeuvre du filtrage spatial récursif l'évaluation en chaque point courant sur chaque droite de balayage d'une fonction de filtrage spatial récursif comprenant un premier passage dans un sens causal et un second passage dans un sens anticausal, avec une évaluation de l'intensité filtrée ($Q_j$) au pixel courant (j) à chaque passage comme une combinaison linéaire de l'intensité ($I_j$) existant préalablement au pixel courant et de la différence entre l'intensité filtrée au pixel adjacent et existant préalablement au pixel courant atténuée par un facteur ($\alpha$) appelé facteur de lissage ($0 < \alpha < 1$).

4. Procédé selon la revendication 3, où l'image est tridimensionnelle et où les systèmes de discrétisation des orientations des gradients ($\Theta_p$) et des droites de balayage ($\psi'_j \psi_j$) comportent 13 axes centrés qui sont les axes d'un système cubique centré à faces et arêtes centrées (CFC).

5. Procédé selon la revendication 3, où l'image est bidimensionnelle et où les systèmes de discrétisation des orientations des gradients ($\Theta_p$) et des droites de balayage ($\psi'_j \psi_j$) comportent 8 axes centrés qui sont régulièrement répartis dans le plan de l'image.

6. Procédé selon l'une des revendications 3 à 5, comprenant des sous-étapes de :

évaluation d'un paramètre basique ($\sigma_0$) de dimension d'un noyau de filtrage isotrope pour filtrer une zone de l'image à gradient substantiellement nul ($\|\vec{G}_p\| \cong 0$),

évaluation des paramètres de dimensions ($\sigma_G$, $\sigma_T$) du noyau anisotrope des sous-filtres passés perpendiculairement une direction discrétisée du gradient, et du paramètre de dimension ($\sigma_{GG}$) du noyau isotrope des sous-filtres passés selon des droites de balayage non perpendiculaires à la direction discrétisée du gradient, et de la contribution à l'anisotropie ($\Delta\sigma_T$) en fonction du paramètre basique ($\sigma_0$) et du module du gradient ($\|\vec{G}_p\| \neq 0$),

évaluation d'un paramètre de dimension (R) qui définit le noyau anisotrope utilisé à chaque passage en fonction de la contribution à l'anisotropie ($\Delta\sigma_T$) et du paramètre de dimension des noyaux isotropes ($\sigma_{GG}$),

et évaluation du facteur de lissage ($\alpha$) comme une fonction du paramètre de dimension (R) dudit noyau de filtre anisotrope utilisé à chaque passage.

7. Procédé selon la revendication 6, où les noyaux isotropes sont des sphères et où les noyaux anisotropes sont des sphères aplaties ayant leur plus grandes dimensions perpendiculaires à la direction discrétisée du gradient.

8. Procédé selon l'une des revendications 3 à 7, comprenant des sous-étapes de :

évaluation d'un pas d'échantillonnage (S) sur toutes les droites de balayage,

et évaluation du facteur de lissage en fonction desdits pas d'échantillonnage.

9. Procédé selon l'une des revendications 3 à 8, comprenant une évaluation de l'intensité filtrée en un pixel donné comme la combinaison des intensités filtrées selon toutes les droites de balayage.

10. Appareil d'imagerie médicale, ayant des moyens pour réduire le bruit dans une image médicale numérique bruitée, comprenant un système d'acquisition d'une image d'intensité sous forme d'une matrice multidimensionnelle de points, et un système de traitement d'image qui a un accès aux données de l'image et à un système d'affichage d'images et qui comprend un microprocesseur pour mettre en oeuvre un procédé selon l'une des revendications 1 à 9.

FIG.1A

FIG.1B

$J_0; I(\alpha, y, z); I(x, y)$ — 100

SCANNING ALONG X,Y,Z;X,Y — 200

$G_x, G_y, G_z; G_x, G_y$ — 300

640 — MEM$(\theta_j, \theta'_j)$

$\|G_p\|; \varphi_p$ — 400

630 — DISCRETION $\theta_p$ — 500

610

MEM$(\psi'_j \psi_j)$  MEM$(\|G_p\|, \theta_p)$  MEM$(\alpha)$ — 620

CAUSAL AND ANTICAUSAL SCANNING ALONG $\psi'_j \psi_j$ — 700

SPATIAL RECURSIVE FILTER
$Q^A(x,y,z); Q^A(x,y)$ — 800

**FIG.2**

J — 900

---

610 — MEM$(\|G_p\|, \theta_p)$

$\|G REF\|$ — 401

402

$\sigma^2_G$  403 $\sigma^2_T$  $\sigma^2_0$ — 404

$\theta_p$

$n_1$

$\sigma^2_{GG}$  405  $\Delta\sigma^2_T$ 406  S — 631  $\psi'_j \psi_j$ — 630

$n_2$

407 — $\alpha(S, R)$   $\theta_p$   **FIG.3A**

MEM$(\alpha)$ — 620

12

**FIG.3B**

3-D SCANNING
$\Psi'_J \quad \Psi_J \quad \perp \quad \bar\theta_p$
?
700

800

NO

YES

$\dfrac{R^2}{S^2} = \sigma^2_{GG}/S^2$ , either $\quad S = 1$
or $\quad S = \sqrt{2}$
or $\quad S = \sqrt{3}$

$\theta_p$ ORIENTATION

$\alpha \ (R,S)$ 407
3 CASES

$\theta_p$ along main axes of CFC

$\theta_p$ toward edge middles of CFC

$\theta_p$ toward vertex of CFC

$S = ?$

$S = ?$

$S = ?$

3 CASES

$S = 1$

$S = \sqrt{2}$

$S = \sqrt{3}$

$\dfrac{R^2}{S^2} = (\sigma^2_{GG} + \dfrac{2}{3}\Delta\sigma^2_T)$

$\dfrac{R^2}{S^2} = (\sigma^2_{GG} + \dfrac{\Delta\sigma^2}{3}T)/2$

$\dfrac{R^2}{S^2} = (\sigma^2_{GG} + \dfrac{\Delta\sigma^2}{2}T)/3$

407 $\alpha\ (R,S)$

407 $\alpha\ (R,S)$

2 CASES

1 CASE

$S = 1$

$S = \sqrt{2}$

$S = \sqrt{2}$

$\dfrac{R^2}{S^2} = (\sigma^2_{GG} + \dfrac{\Delta\sigma^2}{2}T)$

$\dfrac{R^2}{S^2} = (\sigma^2_{GG} + \dfrac{\Delta\sigma^2}{2}T)/2$

$\dfrac{R^2}{S^2} = (\sigma^2_{GG} + \dfrac{\Delta\sigma^2}{2}T)/2$

$\alpha\ (R,S)$ 407

$\alpha\ (R,S)$ 407

$\alpha\ (R,S)$ 407

FIG.3C

FIG.5C

FIG.4A

FIG.4B

FIG.5A

FIG.5B

FIG.6A

FIG.6B

FIG.7A

FIG.7B

FIG.9

FIG.8A

FIG.8B

Office européen
des brevets

**RAPPORT DE RECHERCHE EUROPEENNE**

Numéro de la demande

EP 98 20 4423

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | RAJESH JHA ET AL: "EDGE ADAPTIVE FILTERING: HOW MUCH AND WHICH DIRECTION?" PROCEEDINGS OF THE INTERNATIONAL CONFERENCE ON SYSTEMS, MAN AND CYBERNETICS, CAMBRIDGE, MA., NOV. 14 - 17, 1989, vol. VOL. 1, no. -, 14 novembre 1989, pages 364-366, XP000129805 INSTITUTE OF ELECTRICAL AND ELECTRONICS ENGINEERS * page 364, colonne de droite, ligne 12 - page 365, colonne de gauche, ligne 29 * * page 365, colonne de droite, ligne 21 - ligne 33 * | 1 | G06T5/00 |
| A | GERIG G ET AL: "NONLINEAR ANISOTROPIC FILTERING OF MRI DATA" IEEE TRANSACTIONS ON MEDICAL IMAGING, vol. 11, no. 2, 1 juin 1992, pages 221-232, XP000288458 * page 224, colonne de gauche, ligne 18 - page 225, colonne de droite, ligne 6 * | 1,4,5,10 | |
| A | HERRINGTON D ET AL: "IMAGE PROCESSING AND DISPLAY OF 3D INTRA-CORONARY ULTRASOUND IMAGES" PROCEEDINGS OF THE COMPUTERS IN CARDIOLOGY MEETING, VENICE, SEPT. 23 - 26, 1991, no. MEETING 18, 23 septembre 1991, pages 349-352, XP000312429 INSTITUTE OF ELECTRICAL AND ELECTRONICS ENGINEERS * page 350, colonne de droite, ligne 1 - page 352, colonne de droite, dernière ligne * | 1,10 | **DOMAINES TECHNIQUES RECHERCHES** (Int.Cl.6) G06T |

-/--

Le présent rapport a été établi pour toutes les revendications

| Lieu de la recherche | Date d'achèvement de la recherche | Examinateur |
|---|---|---|
| BERLIN | 6 avril 1999 | Burgaud, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

**RAPPORT DE RECHERCHE EUROPEENNE**

Numéro de la demande

EP 98 20 4423

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | BOLON P ET AL: "SYMMETRICAL RECURSIVE MEDIAN FILTERS APPLICATION TO NOISE REDUCTIONAND EDGE DETECTION" SIGNAL PROCESSING THEORIES AND APPLICATIONS, BARCELONA, SEPT. 18 - 21, 1990, vol. VOL. 2, no. CONF. 5, 18 septembre 1990, pages 813-816, XP000365716 TORRES L;MASGRAU E; LAGUNAS M A ----- | | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| BERLIN | 6 avril 1999 | Burgaud, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)